# EUROPEAN PATENT APPLICATION

(11) **EP 2 703 369 A1**
(43) Date of publication of application: **05.03.2014**
(21) Application number: 12182429.6
(22) Date of filing: 30.08.2012
(51) Int. Cl.: C04B 7/24, C04B 7/43, C04B 7/36, F27B 7/20, F27B 7/32

(54) **Process and plant for cement clinker production**

(71) Applicant: Carbon-Hydrogen-Minerals SPRL, 4610 Vise (Argenteau) (BE)
(72) Inventor: Meyers, Christian, 4601 Visé (Argenteau) (BE); Ericsson, Hans, 11447 Stockholm (SE)
(74) Representative: Bosch, Henry

(57) **Abstract**

Process for cement clinker production including a raw meal preheating step performed in a preheating zone, a calcination step in which the raw meal is brought to a temperature of approx. 800-850°C leading to substantial decomposition of the mineral constituents of the raw meal into their oxides, and a sintering step in which the load is brought to a temperature of 1300 to 1450°C to form Ca₂SiO₄ (or (CaO)₂.SiO₂), to further decompose calcium carbonate and partially melt the load to form Ca₃.SiO₅ (or (CaO)₃.SiO₂) in a rotary kiln (10), followed by cooling of the resulting clinker in a clinker cooling zone (20), and optionally by a clinker milling step in a clinker milling zone, wherein spent foundry sand is supplied (100) into an injection zone (120) part of the calcination zone (110), operated at a material temperature of approx. 800-850 °C. The invention further relates to a plant for carrying out said process.

## Description

### Background Of The Invention

The present invention relates to an improved process for cement clinker production and an improved plant for carrying out the improved process. The present invention furthermore provides a new use of spent foundry sand.

The foundry industry uses molds and core elements made of sand in the casting of metal pieces, a large majority of which is intended for the automotive industry. Two casting processes are known, i.e. one that makes use of sand comprising natural mineral binders, such as bentonite, and one that makes use of synthetic organic binders, such as phenolic resins, furanic resins, polyurethane based resins or epoxy resins and others,and optionally a catalyst. The recycling or disposal of the first type of foundry sand does not constitute a major environmental problem, except maybe the presence of metal casting residues. For the second type of foundry sand, one has to differentiate between the burned spent sand that has been in contact with liquid metal (at approx. 1400°C) and spent non-burned sand which has not been submitted to this thermal chock and which is polluted with synthetic binder. The spent foundry sand of the second type and more specifically the unburned spent sand is far more difficult to recycle and/or to dispose of.

It has been proposed to re-use spent foundry sand in road construction and as additive of low granulometry in the preparation of cement and concrete. It has also been proposed to re-use spent foundry sand as raw material substitute in the clinker manufacturing process.See e.g. Portland Cement Association Sustainable Manufacturing Fact Sheet - 2005. The Activity Report of VDZ (VereinDeutscherZementwerke) 2005-2007 also suggests use of spent foundry sand as alternative raw material. See alsoCement Sector Trends in Beneficial Use of Alternative Fuels and Raw Materials, US Environmental Protection Agency, October 2008. The latter publication nevertheless discourages use of spent foundry sand as alternative raw material because of the increase in CO emissions resulting from the combustion of volatile organic compounds contained in spent foundry sand. Although not fully clear from the publication, it seems the spent foundry sand is proposed to be added together with the raw material or in the preheaters with concomitant formation of CO and other organic compounds.

Known processes for cement production include a preheating step, in which raw meal generally consisting in a mix of lime stone and clay and/or shale as a source of minerals such as silica, aluminum and calcium is preheated, a calcination step in which the raw meal is brought to a temperature beyond 800°C leading to substantial decomposition of the mineral constituents of the raw meal into their oxides, and a sintering step in which the load is brought to a temperature of 1300 to 1450°C to form Ca₂SiO₄ (or (CaO)₂.SiO₂), to further decompose calcium carbonate and partially melt the load to form Ca₃.SiO₅ (or (CaO)₃.SiO₂), followed by cooling of the resulting clinker and by a clinker milling step. The sintering step and to some extent also the calcination step are nowadays generally performed in a rotary kiln. A rotary kiln consists in a slightly inclined (1 - 4°) steel tube rotating about its axis, loaded at the upper end, causing the load to move downhill and equipped with a burner at the lower end. As the load moves under the burner flame in the lower part of the kiln tube, it reaches its peak sintering temperature and is then discharged at the lower end into a cooler. The air required for the burner may be preheated by cooling the clinker. The raw mix may be preheated with the hot gases leaving the upper end of the rotary kiln.

Two major processes are known and distinguished by the raw meal preparation, the wet process and the dry process. In the wet process, the mineral components are ground with added water. While this process has the advantage of a more efficient raw mix preparation and more efficient introduction of the raw meal into the rotary kiln because of reduced dust expulsion at the upper kiln end, it also suffers some significant drawbacks, including extra energy requirements for drawing off the water and an extended kiln length for a given clinker output.

The present invention more specifically relates to the dry process.

Fuels used for firing the kiln burnermay include fossil fuels, such as coal, petroleum coke, heavy fuel oil or gas. Coal is generally preferred because it yields a luminous flame and can generate by radiation temperatures up to 2050°C in the kiln. It is also known to inject oil sludge into the lower end of the kiln. In addition to the primary fuels (introduced at the lower end of the kiln), various combustible waste materials have been fed into the process, which add energy as well as raw materials (minerals) into the process. An example of such waste materials are used tires, which completely burn and the steel cord liner of which adds minerals to the kiln load which then get incorporated into the cement clinker. Another example is sewage sludge or dredging sludge. Other materials such as solvents ornon-hazardous clinical wastes are also generally disposed off in cement kilns.

A plant for carrying out the above cement production process generally comprises a raw material preheating zone, a calcination zone, a sintering zone, a clinker cooling zone and optionally a clinker milling zone. As described above, the sintering zone is located in the rotary kiln, close to the flame. The clinker cooling zone is located downstream of the kiln, at the clinker discharge. The cooling air is heated up by taking heat from the hot clinker (leaving the kiln at more than 1100 °C) and may be used as primary air in the kiln burner. The calcination zone may be partially located in the upper part of the kiln, partially consist in calcination equipment, such as cyclones, mounted upstream of the rotary kiln. In the case of the dry process, the raw mix is preheated by the hot combustion gases expulsed from the rotary kiln. It is known to have this heat exchange between combustion gases and raw mix efficiently performed in cyclones. In building successive cyclone stages, one may bring the temperature of the raw mix up to approximately 800 - 850 °C required for calcination of the raw meal. In the alternative or in addition, one may also build a pre-calciner upstream of the rotary kiln. Such equipment may consist in a suspension heater fired with fuel and receive hot tertiary air from the clinker cooler. The purpose of such pre-calciner is to increase the degree of calcination of the load prior to entering the rotary kiln. As a result, one may use a longer part of the kiln length for sintering, thus increasing output for a given rotary kiln. GB-1454877 discloses a particular embodiment of such equipment.

### Objects Of The Invention

There obviously is a need to reduce disposal of waste products in landfills. There also is a need to reduce environmental pollution by synthetic organic compounds.

The inventors have found that it may be advantageous to efficiently use spent foundry sand as alternative raw material and simultaneously recover the energy contained in it, i.e. in the form of organic compounds (synthetic binder and catalyst), rather than disposal thereof in landfills.

The present invention thus seeks to provide an advantageous use of such spent foundry sand which otherwise is discarded and discharged in landfills.

The present invention further seeks to improve the production costs of cement clinker and, hence, cement by increasing waste material input as raw material provider while keeping environmental pollution under control, meaning no increase of CO or other organic compounds emissions.

The CO2 generation by combustion of the relevant organic binder can obviously not be avoided. It needs to be emphasized, however, that disposal in landfills generates environmental pollution and that thermal treatment of spent foundry sand prior to disposal in landfills, in order to eliminate the organic contaminant also would generate a significant amount of CO2. In the process of the invention, the combustion of the organic contaminant generates heat that is used in the process. The use of spent foundry sand according to the invention thus participates in global CO2 reduction by reduction of fossil fuel usage and avoiding the separate thermal treatment of the spent foundry sand.

### Summary Of The Invention

The present invention thus provides a process for cement clinker production including a raw meal preheating step performed in a preheating zone, a calcination step in which the raw meal is brought to a material temperature of about 800- 850 °C leading to substantial decomposition of the mineral constituents of the raw meal into their oxides, and a sintering step in which the load is brought to a temperature of 1300 to 1450°C to form Ca₂SiO4 (or(CaO)₂.SiO₂), to further decompose calcium carbonate and partially melt the load to form Ca₃SiO5 ((or (CaO)₃.SiO₂) in a rotary kiln, followed by cooling of the resulting clinker in a clinker cooling zone, and optionally by a clinker milling step in a clinker milling zone, wherein spent foundry sand is supplied into an injection zone comprised within the calcination zone, operated ata material temperature of about 800 - 850°C. The injection zone as defined here above advantageously excludes the pre-calciner. Preferably, the spent foundry sand is supplied at the bottom discharge of the lowest cyclone stages and/orat the feed-in slope of the rotary kiln.

Contrary to prior art supply of foundry sand at raw material input, the supply of spent foundry sand at those injection points specified above allows for early combustion of the organic contaminant within the system, without environmental pollution by volatile organic matter other than CO₂.

The spent foundry sand under consideration here obviously is the one that contains organic contaminants; either spent foundry sand used with a synthetic organic binder and possibly catalyst, or spent foundry sand resulting from a mix thereof with foundry sand used with mineral binder.

Metallic contaminants of the spent foundry sand then serve as alternative mineral supply to the clinker produced.

It has been found, that injection of the spent foundry sandaccording to the invention has the advantage that the organic contaminant will almost instantaneously be decomposed and burned at high temperatures. The mineral supply then gets integrated into the load moving through the rotary kiln for sintering (clinker formation) and into the final mineral matrix of the clinker product.

Another advantage of injecting the spent foundry sandaccording to the invention is that the energy contained in it is adduced in an area of the installation where the temperature of the material is essentially constant and the added energy is consumed for chemical conversion.

The amount of spent foundry sand injected into the process is advantageously limited by the admissible total silica (SiO₂) supply into the process, comprising the silica contained in the raw meal, i.e. the silica content in quarry lime stone, and the silica content in the waste material adduced into the process. Total silica supply into the process generally is limited to approx. 50 kg per metric ton of clinker produced.

According to a preferred embodiment, the spent foundry sand is injected at the slope, preferably at the top of the slope on which the at least partially calcinated load enters the rotary kiln.

According to another preferred embodiment, in which the calcination of the raw meal is at least partially performed in successive cyclone stages, the spent foundry sand is injected at the bottom discharge of one or more of the lowest cyclones. As explained above, several cyclone stages are provided for efficient heat exchange between combustion gases and raw meal. As the meal falls through the individual cyclone stages, it is heated up. In the lower stages, the temperature raises and the meal reachesapproximately 800 - 850 °C being thereby already subjected to calcination outside of the rotary kiln.

A preferred process for clinker production comprises a fueled pre-calcination known per seoperated at gas temperatures of about 1000 - 1100 °C, upstream of the rotary kiln, the purpose of which is to add further energy into the calcination zone, upstream of the rotary kiln.

The invention further provides a plant for carrying out the above cement production process, generally comprising a raw material preheating zone, a calcination zone, a sintering zonelocated in a rotary kiln, a clinker cooling zone located downstream of the kiln at the clinker discharge and optionally a clinker milling zone, wherein a supply for spent foundry sand is arranged for injection of said spent foundry sand into an injection zone within the calcination zone, operated at material temperatures of approx. 800-850 °C. Such injection zone advantageously comprises the bottom discharge of the lowest cyclone stages and the feed-in slope of the rotary kiln and preferably excludes the so-called precalciner.

The calcination zone is generally located in the upper part of the kiln. Advantageously, the calcination zone may, in addition, be extended bya calcination equipment mounted upstream of the rotary kiln (in the material flow direction).

It is known to have the heat exchange between combustion gases and raw mix efficiently performed in cyclones. The preheating zone may thus advantageously comprise one or more stages of cyclones.

In building successive cyclone stages, one may bring the temperature of the raw mix up to more than 800°C, that is temperatures of about 800 - 850 °Cas required for calcination of the raw meal. In such instances, one may advantageously inject the spent foundry sand at the bottom discharge of one or more of the lowest cyclones that are part of the calcination zone. The equipment thus comprises a sand injection port at the bottom discharge of one or more of the lowest cyclones of the calcination zone.

According to another embodiment, the spent foundry sand may be injected at the slope,that is the slope for introduction of meal, preferably already partially calcined meal, into the rotary kiln. The equipment thus comprises a sand injection port at the slope, preferably at the top of the slope.

Modern plants comprise a pre-calciner upstream of the rotary kiln. Such equipment is known per se and may consist in a suspension heater fired with fuel and receive hot air from the clinker cooler through a conduct by-passing the kiln. The purpose of such pre-calciner is to yet increase the degree of calcination of the load prior to entering the rotary kiln. Such pre-calciner may be mounted in parallel with one or more cyclone stages that form part of the calcination zone.As mentioned earlier, it is not advisable to inject spent foundry sand in the precalciner because the load of sand is likely to affect the flame of the burner and/or the material temperature within the precalciner.

The spent foundry sand may be transferred from a storage equipment, such as a silo, and injected at the desired injection point into the process by means of a volumetric feeder or a pneumatic feeder.

The invention thus also provides a new use of spent foundry sand. Injection may advantageously occur at the bottom of the lowest cyclone stages and/orat the material loading slope of the rotary kiln.

### Description Of Drawings

The invention will be explained in detail herein below with reference to the accompanying drawings. In the drawings:
- Fig.1 is a schematic representation of a plant of the invention for performance of the process of the invention;
- Fig. 2 shows a simplified enthalpy diagram for a cement clinker production in accordance with the invention.

### Detailed Description Of The Invention

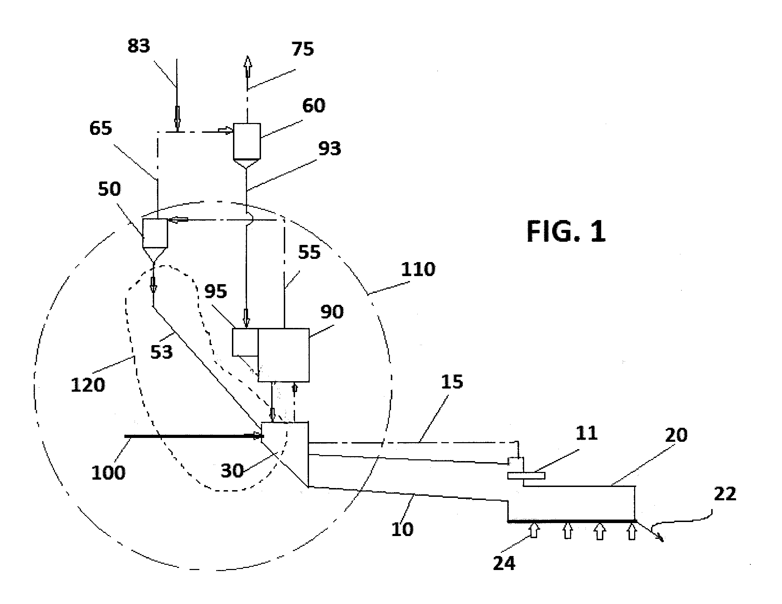

With reference to Fig. 1, a plant for clinker production generally comprises a rotary kiln 10, a clinker cooler 20, a slope 30 for raw meal supply into the kiln and a meal preheating zone composed of cyclones.

The rotary kiln consists in a long slightly inclined (1° - 4°) rotary steel tube the inside of which is lined with refractory material. The tube is rotated by appropriate engines and rests on suitable bearings as is known to those skilled in the art. The lower end of the rotary kiln is equipped with a burner 11. Said burner 11 generates a high temperature flame in the kiln 10 thus providing the required energy for total or partial calcination and sintering at about 1450 °C of the cement clinker produced. The cement clinker is discharged into a cooler 20. The final product is then discharged at 22 at an average temperature of about 100 - 150 °C for further grinding,transport, storing and/or use. The primary air finally supplied to the burner 11 advantageously first enters the cooler 20 at air admission 24 for prior heating at approx. 1000 °C. The fuel used in burner 11 may consist in gas, oil or coal. As mentioned earlier in connection with the prior art, one may additionally inject alternative fuelsinto the burner. The raw material enters the rotary kiln at the upper end, through slope 30, and moves down the inclined kiln 10 while same is rotating. The raw meal is supplied at a desired particle size at loading unit and moves down several cyclone stages, in which it gets preheated by the ascending hot gases, for example 65 and 75,and already partly calcined by the ascending hot combustion gases such as 55 at temperatures significantly above 800 °C expulsed from the kiln, before entering the kiln through slope 30. The combustion gases finally are released from the whole system at temperatures ranging from approx. 350 to450 °C. Said combustion gases may obviously be treated and/or cleaned as appropriate and known in the art. The solid fraction 83separated by an upper cyclone is injected into the combustion gas supply to the next cyclone stage 60. The solid fraction 53 separated by the lower cyclone 50 is finally supplied to the rotary kiln through slope 30. The intimate contact between the raw meal and the hot gases in the cyclone stages insures a progressive heating of the raw meal up to a temperature around 850 °C in the lower cyclone stage 50. Under such conditions, the meal is already calcinedto a certain extent before entering the rotary kiln. As a result most of the kiln length may be used for sintering at material temperatures around 1450 °C. According to a preferred embodiment and in order to further effect calcination of the raw meal prior to entering the rotary kiln, it is known to arrange a precalciner 90 upstream of the kiln (in terms of material flow), in parallel to the lower cyclone stages. Precalciner 90 preferably consists in a suspension heater in which the raw meal is suspended with combustion gases from the kiln. It comprises a hot raw meal supply 93, a burner 95 with appropriate fuel supply and primary air supply at about 1000 °C, preferably from the cooler 20, supplied by a bypass 15 thus carrying out calcination at gas temperatures of about 1000 - 1200 °C. As mentioned earlier, the more the load supplied to the rotary kiln 10 is already calcined, the more the kiln length may be used for sintering at approx. 1450 °C thanks to the heat generated by the flame in the kiln, and the more the throughput of the kiln may be increased.

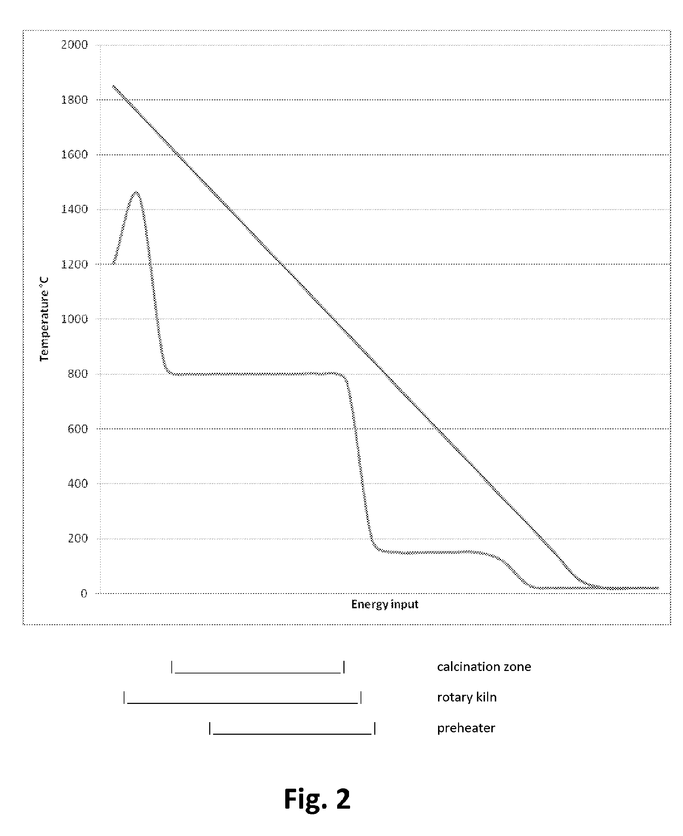

The schematic diagram of Fig. 2 shows the gas temperature (inclined line at the top of Fig.2) and the material temperature as a function of energy input for a dry process for clinker manufacturing. It appears clearly that a substantial amount of energy is required to calcine the load, prior to sintering the cement klinker at about 1450 °C.Most of the energy is recovered from the combustion gases leaving the kiln. Any additional energy added into the system at that calcination stage is used to calcine the material while the material temperature does not raise above approx. 850 °C.

It clearly appears from Fig. 2 that the more calcination is carried out outside of the rotary kiln, the more the rotary kiln may be used for sintering, thus increasing the material throughput for the same kiln or allowing for reduction of kiln dimensions for a same throughput.

One may also understand from Fig.2 that some clinker production equipment may be arranged to perform the whole calcination and sintering within the rotary kiln, just some preheating being effected outside of the kiln (see limits marked "rotary kiln"). Some other equipment may comprise a so-called pre-heater upstream of the kiln, which performs pre-heating and partial (major part of the) calcination of the load prior to entering the rotating kiln (see limits marked "pre-heater"). The calcination zone in which raw meal gets calcined at material temperatures of 800 - 850 °C (prior to sintering) consists in the shoulder which is identified as such on Fig.2.

According to the invention, and with reference to Fig.1 again, spent foundry sand may be charged into the system, into an injection zone 120 comprised within the calcination zone 110,by a feederequipment 100. According to the invention, the spent foundry sand is supplied to the process in an injection zone 120, operating at a material temperature of about 800 - 850 °C, advantageously comprising the bottom discharge of the lowest cyclones and the slope 30. Fig. 1 shows injection of spent foundry sa and at slope 30. In the alternative, one may also inject the spent foundry sandin solid fraction discharge 53.

The feeder equipment 100 advantageously consists in a volumetric feeder or a pneumatic feeder.

It is known to load used tires into the clinker processing, atslope 30. Said tires are known to add energy and minerals into the kiln. The process and plant of the invention may provide for additional tire injection as well.

The inventors have found it particularly advantageous to inject the spent foundry sand in the calcination zone, at locations operating at a material temperature of about 800 - 850 °C because the energy added at that stage does not impact the process temperature and, to the contrary,is advantageously recovered to facilitate calcination prior to sintering. The minerals contained in it are useful in the final cement composition.

It is further to be emphasized that while CO2 generation by combustion of the organic contaminant of the spent foundry sand cannot be avoided, it replaces to a large extent the CO2 that would otherwise have been formed by combustion of noble energy and further destruction of the organic contaminant by incineration with concomitant CO2 generation is no longer required. On the whole, the use of spent foundry sandaccording to the invention thus assists in reducing CO2 generation.

## Claims

1. A process for cement clinker production including a raw meal preheating step performed in a preheating zone, a calcination step in which the raw meal is brought to a temperature of approximately 800 - 850 °C leading to substantial decomposition of the mineral constituents of the raw meal into their oxides, and a sintering step in which the load is brought to a temperature of 1300 to 1450°C to form Ca₂SiO₄ (or (CaO)₂.SiO₂), to further decompose calcium carbonate and partially melt the load to form Ca₃.SiO₅ (or (CaO)₃.SiO₂) in a rotary kiln, followed by cooling of the resulting clinker in a clinker cooling zone, and optionally by a clinker milling step in a clinker milling zone, wherein spent foundry sand is supplied in an injection zone comprised within the calcination zone, operated at a material temperature of approx. 800 - 850 °C.

2. Process according to any preceding claim, **characterized in that** the spent foundry sand is injected into the calcination zone, at the slope, preferably at the top of the slope on which the at least partially calcinated load enters the rotary kiln.

3. Process according to any preceding claim, **characterized in that** preheating and calcination of raw meal is effected in cyclone stages and the spent foundry sand is injected into the calcination zone, at the bottom discharge of one or more of the lower cyclones.

4. A plant for cement clinker production comprising a raw material preheating zone, a calcination zone (110), a sintering zone located in a rotary kiln (10), a clinker cooling zone (20) located downstream of the kiln (10)at the clinker discharge, optionally followed by a clinker milling zone, **characterized in that** a supply for spent foundry sand (100) is arranged for injection of spent foundry sand into an injection zone (120) of the calcination zone (110), operated at a material temperature of about 800 - 850 °C.

5. The plant according to claim 4 **characterized in that** the spent foundry sand is injected at the bottom discharge of one or more of the cyclones (50) that are part of the calcination zone (110).

6. The plant according to any of claims 4 to 5 **characterized in that** the spent foundry sand is injected at the slope, preferably at the top of the slope on which the at least partially calcinated load enters the rotary kiln.

7. The plant according to any of claims 4 to 7 **characterized in that** spent foundry sand is transferred and injected into the process by means of a volumetric feeder or pneumatic feeder.

8. Use of spent foundry sand as raw material and energy supply in an injection zone part of the calcination zone of a dry cement clinker manufacturing process, operating at a material temperature of about 800 - 850 °C.
